# EUROPÄISCHE PATENTSCHRIFT

(11) **EP 3 459 668 B1**
(45) Veröffentlichungstag und Bekanntmachung des Hinweises auf die Patenterteilung: **12.07.2023**
(21) Anmeldenummer: 17193025.8
(22) Anmeldetag: 25.09.2017
(51) Int. Cl.: B23K 10/02, B23K 9/02, B23K 9/12, B23K 9/167

(54) **SCHUTZGASSCHWEISSVERFAHREN ZUM STICHLOCHSCHWEISSEN**
INERT GAS WELDING METHOD FOR KEYHOLE WELDING
PROCÉDÉ DE SOUDAGE SOUS GAZ DE PROTECTION POUR SOUDAGE EN BOUCHON

(43) Veröffentlichungstag der Anmeldung: 27.03.2019
(73) Patentinhaber: Plasch, Siegfried, 4600 Wels (AT)
(72) Erfinder: Plasch, Siegfried, 4600 Wels (AT)
(74) Vertreter: Jell, Friedrich

(56) Entgegenhaltungen:
- EP-A1- 1 980 354
- EP-A1- 2 644 306
- DE-A1-102015 210 741
- GB-A- 1 572 847
- JP-A- H0 839 259

## Beschreibung

Die Erfindung betrifft ein Schutzgasschweißverfahren zum Stichlochschweißen nach dem Oberbegriff des Anspruchs 1.

Um die Prozessstabilität beim Zusammenfließen der Schmelze hinter einem Stichloch zu verbessern, wenn der Schweißbrenner mit einer nichtabschmelzenden Elektrode entlang eines zu schweißenden Werkstücks geführt wird, schlägt die EP1980354A1 vor, die Schmelze des Schmelzbads in Schwingungen zu versetzen, indem der Staudruck des Schutzgases des Schweißbrenners, nämlich Plasmabrenners, verändert wird. Solch eine Staudruckvariation bedarf jedoch einer besonderen Sorgfalt, - nicht nur, weil eine abschirmende Wirkung des Schutzgases erhalten bleiben muss, sondern auch, weil dabei eine seitliche Verdrängung der Schmelze in engen Grenzen gehalten werden muss, um die Nahtqualität dabei nicht zu gefährden. Zudem bedarf es beim Stichlochschweißen häufig der Zuführung eines Schweißzusatzes, welcher in Form eines Drahts in Führungsrichtung bzw. Schweißrichtung des Schweißbrenners vorlaufend in den Lichtbogen bzw. Plasmastrahl und damit in das Schmelzbad eingebracht wird. Mit einer Störung des für die Ausbildung des Stichlochs verantwortlichen Lichtbogens bzw. Plasmastrahls kann damit gerechnet werden - was sich folglich nachteilig auf Prozessstabilität und Schweißgeschwindigkeit auswirken kann.

Ein Stand der Technik nach dem Oberbegriff des Anspruchs 1 ist aus der JPH0839259A bekannt.

Die Erfindung hat sich daher die Aufgabe gestellt, ein Schutzgasschweißverfahren zum Stichlochschweißen der eingangs geschilderten Art in der Handhabung zu vereinfachen, damit aber dennoch eine hohe Reproduzierbarkeit und Schweißgeschwindigkeit zu gewährleisten.

Die Erfindung löst die gestellte Aufgabe durch die Merkmale des Anspruchs 1.

Wird der mit einem Vorschub eingebrachte Draht in Führungsrichtung des Schweißbrenners nachlaufend in das Schmelzbad eingebracht, kann dies zu einem Aufschmelzen des Schweißzusatzes führen, ohne damit den Lichtbogen bzw. den Plasmastrahl in der Ausprägung zu beeinflussen. Das nachlaufende Einbringen also ein Einbringen des Drahts hinter dem Schweißbrenner in Führungsrichtung gesehen kann nämlich eine Störung der Ausbildung des Stichlochs vermeiden, was zu einer hohen Prozessstabilität führen kann. Wird zudem der in das Schmelzbad eingebrachte Draht zusätzlich entlang seiner Vorschubrichtung vor und zurück bewegt, kann der Schweißzusatz auch dazu verwendet werden, das Schmelzbad in Schwingungen zu versetzten. Dies begünstigt unter anderem das Zusammenfließen der Schmelze hinter dem Stichloch - was die Nahtqualität verbessern, die Prozessstabilität weiter erhöhen und auch eine höhere Schweißgeschwindigkeit zulassen kann. Aufgrund dieser besonderen Art der Zuführung des Drahts kann sohin eine einfache Handhabung mit hoher Reproduzierbarkeit im Verfahren kombiniert werden.

Die Prozessstabilität des Stichlochschweißens wird erfindungsgemäß weiter verbessert, wenn der Draht kontinuierlich vorgeschoben wird. Zudem kann dies in Zusammenhang mit dem Vor- und Zurückbewegen des Drahts einer Homogenisierung des Schmelzbads dienlich sein. Die Materialeigenschaften der Schweißnaht können damit -trotz der hohen Führungsgeschwindigkeit des der Schweißbrenners bzw. Schweißgeschwindigkeit- erhalten bleiben.

Wird der Draht mit einem Anstellwinkel zum Werkstück von 40 bis 80 Grad in das Schmelzbad eingebracht, kann dies ein verbessertes, gleichmäßigeres Abschmelzen des Drahtes ermöglichen.

Das Abschmelzen des Drahts kann weiter verbessert werden, wenn Draht mit einem Anstellwinkel zum Werkstück von 55 bis 80 Grad in das Schmelzbad eingebracht wird.

Ist der abschmelzende Draht ein Heißdraht, kann die Schweißgeschwindigkeit im Verfahren und damit die Prozessgeschwindigkeit weiter erhöht werden. Der beispielsweise mit einer Heißdrahtstromquelle belastete Draht kann nämlich so aufgeheizt in das Schmelzband eingebracht werden, was zu höheren Abschmelzraten am Draht genützt werden und zu einer höheren Schweißgeschwindigkeit führen kann.

Um die Standfestigkeit des Schutzgasschweißverfahrens weiter zu erhöhen, kann die nichtabschmelzende Elektrode als Wolframelektrode ausgebildet sein.

Vorzugsweise ist der Schweißbrenner als WIG-Brenner ausgebildet, um damit eine vergleichsweise hohe Schweißgutqualität an der Naht zu schaffen. Damit kann die Reproduzierbarkeit des Verfahrens weiter erhöht werden.

Die Prozessstabilität kann weiter erhöht werden, wenn der abschmelzende Draht durch ein Schutzgas, das am Schweißbrenner ausströmt, durchgeführt und dann in das Schmelzbad eingebracht wird.

Wird der mit Vorschub eingebrachte Draht in Führungsrichtung des Schweißbrenners gesehen in der rückwärtigen Hälfte, insbesondere im rückwärtigen Drittel, des Schmelzbads eingebracht, kann dies eventuelle Störeinflüsse auf die Ausbildung des Stichlochs standfest vermeiden. Die Prozessstabilität kann sich dadurch weiter erhöhen.

Bevorzugt kann sich das erfindungsgemäße Schutzgasschweißverfahren auch in der Schweißposition PA eignen.

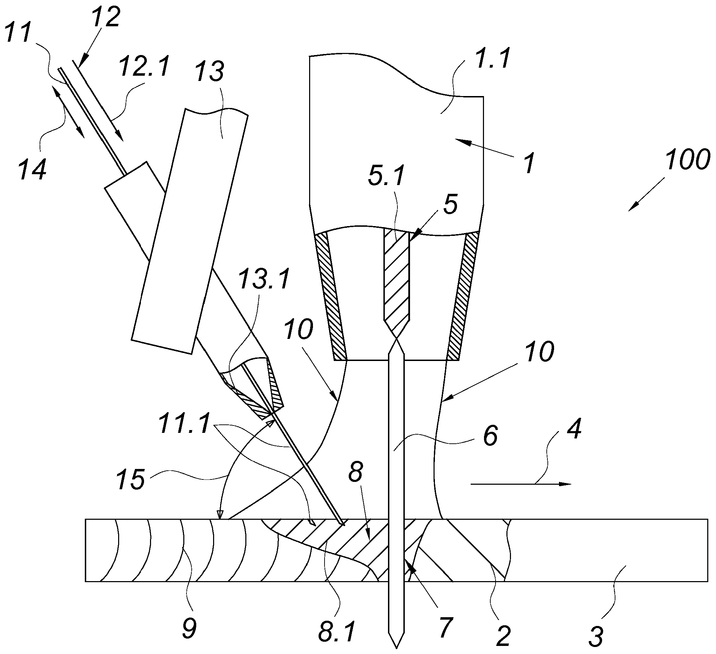

In der Figur ist beispielsweise der Erfindungsgegenstand anhand einer Ausführungsvariante näher dargestellt.

Gemäß der Figur wird ein Schutzgasschweißverfahren 100 zum Stichlochschweißen bzw. Stichlochschweißverfahren in der Schweißposition PA gezeigt.

Andere Schweißpositionen nach DIN EN ISO 6947 sind denkbar, beispielsweise die Schweißposition PC. Dabei wird ein Schweißbrenner 1, nämlich ein WIG (Wolfram-Inertgas) Brenner 1.1, entlang eines ersten metallischen Werkstücks 2 geführt, um dieses mit einem zweiten metallischen Werkstück 3 zu einem Schweißteil zu verschweißen. Der Schweißbrenner 1 wird für dieses Verbindungsschweißen in Führungsrichtung 4 also in Schweißrichtung bewegt. Alternativ zum WIG-Brenner sind auch MAG-Brenner, Plasma-Brenner etc. vorstellbar. Das Schweißen kann im Stumpfstoß (I-Stoß) oder Überlappungsstoß, etc. der Werkstücke 2, 3 erfolgen.

Zwischen einer nichtabschmelzende Elektrode 5, nämlich Wolframelektrode 5.1, des Schweißbrenners 1 und den metallischen Werkstücken 2, 3 wird ein Lichtbogen 6 erzeugt, der die Werkstücke 2, 3 durchstößt und eine Schweißöse bzw. Stichloch 7 ausbildet. Die in Führungsrichtung 4 aufgeschmolzene Metallschmelze 8.1 wird durch den Lichtbogen 6 um das Stichloch 7 herumgeführt und bildet ein Schmelzbad 8 aus, das zu einer festen Naht 9 zwischen den Werkstücken 2, 3 erstarrt.

Der Lichtbogen 6 ist von einem Schutzgas 10 umgeben, welches den Lichtbogen 6 und die Schweißstelle bzw. das Schmelzbad 8 vor unerwünschten Einflüssen aus der Umgebung schützt.

In das Schmelzbad 8 wird ein abschmelzender Draht 11, nämlich ein elektrisch erhitzter Heißdraht 11.1, als Schweißzusatz mit einem Vorschub 12 direkt eingebracht. Diese elektrische Erhitzung erfolgt mit Hilfe einer Führungsdüse 13.1 einer Drahtführung 13, die auf einem elektrischen Potential liegt. Mit diesem Schweißzusatz kann beispielsweise an der Nahtoberseite Material hinzugefügt und/oder können unerwünschte Einbrandkerben vermieden werden.

Im Gegensatz zum Stand der Technik wird der mit einem kontinuierlichen Vorschub 12 eingebrachte Draht 11 in Führungsrichtung 4 des Schweißbrenners 1 nachlaufend in das Schmelzbad 8 direkt eingebracht. Der sohin in das Schmelzbad 8 eingebrachte Draht 11 beeinträchtigt erfindungsgemäß damit nicht den Lichtbogen 6, was die Ausbildung des Stichlochs 7 sicherstellt. Vorzugsweise wird der Draht 11 in Führungsrichtung 4 des Schweißbrenners 1 gesehen in der rückwärtigen Hälfte des Schmelzbads 8 eingebracht wird. Der Draht 11 kann auch im rückwärtigen Drittel des Schmelzbads 8 eingebracht werden kann, was in der Figur angedeutet worden ist, um bei hoher Schwingungsanregung des Schmelzbads 8 die Gefahr einer Beeinträchtigung des Stichlochs 7 weiter zu reduzieren.

Zusätzlich zum kontinuierlichen Vorschub 12 wird der Draht 11 entlang seiner Vorschubrichtung 12.1 vor und zurück bewegt. Beispielsweise ist eine Vor- und Zurückbewegung 14 des Drahts 5 mit einer Überlagerungsamplitude von 4 bis 12 mm vorstellbar. Diese Vor- und Zurückbewegung 14 des Drahts 11 versetzt das Schmelzbad 8 in Schwingungen, was das Zusammenfließen der Metallschmelze 8.1 hinter dem Stichloch 7 verbessert. Zudem ist dieses Verfahren vergleichsweise einfach handhabbar. Hohe Nahtqualität, Prozessstabilität und Schweißgeschwindigkeit sind sohin reproduzierbar möglich.

Der Draht 11 wird mit einem Anstellwinkel 15 zum ersten Werkstück 2 im Bereich von 40 bis 80 Grad, vorzugsweise von 55 bis 80 Grad, nämlich wie in der Figur dargestellt mit 60 Grad in das Schmelzbad 8 eingebracht, was zu einer besonderen Schwingungsanregung des Schmelzbads 8 führt. Der Anstellwinkel 15 wird über die Neigung der Führungsdüse 13.1 zum Werkstück 2 eingestellt.

Wie der Figur zudem zu entnehmen, wird der abschmelzende Draht 11 durch das Schutzgas 10, das am Schweißbrenner 1 ausströmt, durchgeführt und zum Schweißbad 8 hingeführt, in das der Draht 11 gegebenenfalls auch eintaucht. Eine hohe Prozessstabilität wird damit sichergestellt.

## Patentansprüche

1. Schutzgasschweißverfahren zum Stichlochschweißen, bei welchem ein Schweißbrenner (1) mit einer nichtabschmelzenden Elektrode (5) entlang mindestens eines Werkstücks (2, 3) zum Verbindungsschweißen geführt wird und sich dabei ein Schmelzbad (8) am Werkstück (2, 3) ausbildet, in welches Schmelzbad (8) ein abschmelzender Draht (11) als Schweißzusatz mit einem Vorschub (12) eingebracht wird, wobei der mit einem Vorschub (12) eingebrachte Draht (11) in Führungsrichtung (4) des Schweißbrenners (1) nachlaufend in das Schmelzbad (8) eingebracht wird, **dadurch gekennzeichnet, dass** der Draht (11)zusätzlich entlang seiner Vorschubrichtung (12.1) vor und zurück bewegt wird und kontinuierlich vorgeschoben wird.

2. Schutzgasschweißverfahren nach Anspruch 1, **dadurch gekennzeichnet, dass** der Draht (11) mit einem Anstellwinkel (15) zum Werkstück (2, 3) von 40 bis 80 Grad in das Schmelzbad (8) eingebracht wird.

3. Schutzgasschweißverfahren nach Anspruch 2, **dadurch gekennzeichnet, dass** Draht (11) mit einem Anstellwinkel (15) zum Werkstück (2, 3) von 55 bis 80 Grad in das Schmelzbad (8) eingebracht wird.

4. Schutzgasschweißverfahren nach einem der Ansprüche 1 bis 3, **dadurch gekennzeichnet, dass** der abschmelzende Draht (11) ein Heißdraht (11.1) ist.

5. Schutzgasschweißverfahren nach einem der Ansprüche 1 bis 4, **dadurch gekennzeichnet, dass** die nichtabschmelzende Elektrode (5) als Wolframelektrode (5.1) ausgebildet ist.

6. Schutzgasschweißverfahren nach einem der Ansprüche 1 bis 5, **dadurch gekennzeichnet, dass** der Schweißbrenner (1) als WIG-Brenner (1.1) ausgebildet ist.

7. Schutzgasschweißverfahren nach einem der Ansprüche 1 bis 6, **dadurch gekennzeichnet, dass** der abschmelzende Draht (11) durch ein Schutzgas (10), das am Schweißbrenner (1) ausströmt, durchgeführt und dann in das Schmelzbad (8) eingebracht wird.

8. Schutzgasschweißverfahren nach einem der Ansprüche 1 bis 7, **dadurch gekennzeichnet, dass** der mit Vorschub (12) eingebrachte Draht (11) in Führungsrichtung (4) des Schweißbrenners (1) gesehen in der rückwärtigen Hälfte, insbesondere im rückwärtigen Drittel, des Schmelzbads (8) eingebracht wird.

9. Schutzgasschweißverfahren nach einem der Ansprüche 1 bis 8 in der Schweißposition PA.

## Claims

1. Inert gas welding method for keyhole welding, in which a welding torch (1) with a non-melting electrode (5) is guided along at least one workpiece (2, 3) for joint welding and a melt pool (8) is formed in this case on the workpiece (2, 3), into which melt pool (8) a melting wire (11) is introduced as a welding filler with a feed (12), wherein the wire (11) introduced with a feed (12) is introduced into the melt pool (8) in a trailing manner in the guide direction (4) of the welding torch (1), **characterized in that** the wire (11) is additionally moved back and forth along its feed direction (12. 1) and is continuously advanced.

2. Inert gas welding method according to claim 1, **characterized in that** the wire (11) is introduced into the melt pool (8) at an angle of incidence (15) to the workpiece (2, 3) of 40 to 80 degrees.

3. Inert gas welding method according to claim 2, **characterized in that** wire (11) is introduced into the melt pool (8) at an angle of incidence (15) to the workpiece (2, 3) of 55 to 80 degrees.

4. Inert gas welding method according to one of claims 1 to 3, **characterized in that** the melting wire (11) is a hot wire (11.1).

5. Inert gas welding method according to one of claims 1 to 4, **characterized in that** the non-melting electrode (5) is designed as a tungsten electrode (5.1).

6. Inert gas welding method according to one of claims 1 to 5, **characterized in that** the welding torch (1) is designed as a TIG torch (1.1).

7. Inert gas welding method according to one of claims 1 to 6, **characterized in that** the melting wire (11) is passed through an inert gas (10) flowing out at the welding torch (1) and then introduced into the melt pool (8).

8. Inert gas welding method according to one of claims 1 to 7, **characterized in that** the wire (11) introduced with feed (12) is introduced in the rear half, more particularly in the rear third, of the melt pool (8), as viewed in the guide direction (4) of the welding torch (1).

9. Inert gas welding method according to one of claims 1 to 8 in the welding position PA.

## Revendications

1. Procédé de soudage sous gaz protecteur pour le soudage en bouchon, dans lequel une torche de soudage (1) avec une électrode non fusible (5) est guidée le long d'une pièce (2, 3) en vue d'un soudage d'assemblage et un bain de fusion (8) se forme ainsi que la pièce (2, 3), un fil fusible (11) étant introduit dans ce bain de fusion (8) comme additif de soudage avec un avancement (12), le fil (11) introduit avec un avancement (12) étant introduit dans le bain de fusion (8) en suivant dans le sens de guidage (4) de la torche de soudage (1), **caractérisé en ce que** le fil (11) et en outre déplacé en va-et-vient le long d'une direction d'avancement (12.1) et avancé de façon continue.

2. Procédé de soudage sous gaz protecteur selon la revendication 1, **caractérisé en ce que** le fil (11) est introduit dans le bain de fusion (8) avec un angle d'approche (15) vers la pièce (2, 3) de 40 à 80 degrés.

3. Procédé de soudage sous gaz protecteur selon la revendication 2, **caractérisé en ce que** le fil (11) est introduit dans le bain de fusion (8) avec un angle d'approche (15) vers la pièce (2, 3) de 55 à 80 degrés.

4. Procédé de soudage sous gaz protecteur selon l'une des revendications 1 à 3, **caractérisé en ce que** le fil fusible (11) est un fil chaud (11.1).

5. Procédé de soudage sous gaz protecteur selon l'une des revendications 1 à 4, **caractérisé en ce que** l'électrode non fusible (5) est conformée comme une électrode au tungstène (5.1).

6. Procédé de soudage sous gaz protecteur selon l'une des revendications 1 à 5, **caractérisé en ce que** la torche de soudage (1) est conformée comme une torche TIG (1.1).

7. Procédé de soudage sous gaz protecteur selon l'une des revendications 1 à 6, **caractérisé en ce que** le fil fusible (11) est passé à travers un gaz protecteur (10) qui sort de la torche de soudage (1), puis introduit dans le bain de fusion (8).

8. Procédé de soudage sous gaz protecteur selon l'une des revendications 1 à 7, **caractérisé en ce que** le fil (11) introduit avec un avancement (12) est introduit, vu dans le sens de guidage (4) de la torche de soudage (1), dans la moitié arrière, en particulier dans le tiers arrière, du bain de fusion (8).

9. Procédé de soudage sous gaz protecteur selon l'une des revendications 1 à 8 dans la position de soudage PA.
